(19) Europäisches Patentamt
European Patent Office
Office européen des brevets

(11) Numéro de publication: **0 176 458**
**A1**

(12) **DEMANDE DE BREVET EUROPEEN**

(21) Numéro de dépôt: 85430023.3

(22) Date de dépôt: 29.07.85

(51) Int. Cl.4: **B 60 F 3/00**
B 63 B 35/82

(30) Priorité: 13.08.84 FR 8412828
24.01.85 FR 8501105

(43) Date de publication de la demande: 02.04.86 Bulletin 86/14

(84) Etats contractants désignés: AT BE CH DE GB IT LI LU NL SE

(71) Demandeur: Chauveau, Jean Claude
Villa Bacchus Bd Jeanne d'Arc
F-06210 Mandelieu(FR)

(72) Inventeur: Chauveau, Jean Claude
Villa Bacchus Bd Jeanne d'Arc
F-06210 Mandelieu(FR)

(74) Mandataire: Hautier, Jean-Louis
Cabinet Hautier Office Méditerranéen de Brevets d'Invention 24 rue Masséna
F-06000 Nice(FR)

(54) **Dispositif pour accoupler deux planches à voile pour obtenir un engin terrestre ou marin propulsé au moins par une hélice aérienne.**

(57) Dispositif pour accoupler deux planches à voile pour obtenir un engin terrestre ou marin. Il est composé d'un cadre d'accouplement (1) qui est fixé aux planches à voile (9) par au moins deux points de fixation (7, 8). Les points de fixation sont disposés au niveau de l'emplanture (5) de chaque mât et au niveau de chaque puits de dérive (6). Le cadre d'accouplement (1) est composé de deux tubes qui font office de traverses (2-3) coulissantes en fonction de l'écartement entre les deux planches (9) et qui reçoivent le tube chassis (13). Aux extrémités des traverses peuvent être fixées des roues amovibles (5).

16
15
10
14
11
A
13
19
18°
9
6
A
8
7
5
Fig.1

EP 0 176 458 A1

Croydon Printing Company Ltd.

0176458

L'invention a pour objet un dispositif pour accoupler deux planches à voile ou deux planches de skis pour obtenir un engin terrestre ou marin propulsé par au moins une hélice aérienne. L'invention s'applique notamment à un hydroglisseur, simple d'emploi, insubmersible, transportable et d'un coût très modique.

Un dispositif d'accouplement a déjà été décrit dans le brevet FR. A 2.506.254. Le but de cette invention est d'obtenir un catamaran. Le dispositif décrit un cadre rigide qui solidarise les planches à voile par les emplantures de mât (18, 19) et une traverse (35) fixée au niveau des anneaux de remorquage. Ce cadre est utilisable pour de petites vitesses et par un très petit temps ; pour une autre utilisation, ce cadre va se disloquer rapidement, les points d'attache du cadre n'étant pas assez nombreux.

L'état de la technique peut également être défini par les brevets suivants : FR-A-2.537.508, FR-A-2.492.334, DE-A-2.938.211.

Le brevet N° 2.537.508 décrit un char à voile amphibie propulsé par le vent, constitué d'une voile sur un mât et d'une ou plusieurs planches, sur lesquelles, par l'intermédiaire de barres, sont fixées des roues comparables à des disques faisant office de dérives et d'ailerons dans l'eau, et de roue sur terre.

Le brevet 2.492.334 décrit un engin navigable à propulsion humaine.

Le brevet DE-A-2.938.211 décrit une planche à voile adaptable à la propulsion à la rame.

Ces différents documents décrivent essentiellement des engins adaptables avec de faibles moyens à des engins de plage qui n'offrent aucune stabilité et aucune fiabilité.

L'invention évite cet inconvénient. Elle permet un accouplement solide de deux planches à voile. Le cadre, fixé aux deux planches, permet de mettre en place un moteur à hélice aérienne.

A cet effet, le cadre rigide, qui solidarise les planches à voile, utilise les emplantures de mât, les anneaux de remorquage, mais également les points de dérive. C'est ce cadre qui permet l'utilisation d'un moteur. A ce jour, les essais d'adaptation de moteur, sur une seule planche à voile, se sont révélés insatisfaisants, notamment du fait de la mauvaise stabilité de la planche. Quant aux accouplements de planches à voile, ils n'ont permis d'utiliser que des moyens de propulsion humaine ou à voile.

C'est pourquoi, l'inventeur a étudié un dispositif pour accoupler deux planches à voile, puis à mettre en place un moteur à hélice aérienne. On obtient ainsi un hydroglisseur sans danger pour l'utilisation de ce type d'engins près des baigneurs. La planche à voile peut être utilisée sans aucune détérioration.

Ledit cadre peut comporter des roues amovibles qui permettent d'utiliser l'engin, soit sur les grandes plages, en engin terrestre avec son moteur, soit comme moyen pour mettre l'engin à l'eau.

Le cadre est composé de deux tubes qui font office de traverses et aux extrémités desquelles peuvent être fixées des roues amovibles.

Lesdites traverses sont fixées d'une part au niveau de l'emplanture de chaque mât, d'autre part au niveau de chaque puits de dérive.

Au niveau de l'emplanture du mât, la fixation se fait par un emboîtage avec un pied autobloquant analogue à celui du mât.

Au niveau du puits de dérive, la fixation s'effectue au moyen d'une plaque de couche disposée sous la planche de manière à éviter l'arrachement.

Sur lesdites traverses, est disposé un moyen faisant office de plancher ; ledit plancher est entouré par un tube châssis solidaire des traverses.

Une barre d'accouplement est disposée entre les deux anneaux d'amarrage. Ladite barre d'accouplement est gainée de caoutchouc.

Au niveau de la poupe, un cadre vertical fixé au tube châssis, permet de recevoir, sur un berceau, un moteur actionnant une hélice aérienne. Ledit moteur est orientable par une barre ou un volant disposé vers la proue. Au niveau de la proue, un carénage profilé assure la protection de l'utilisateur contre les embruns. Ledit carénage peut être formé par une toile plastifiée ou en polyester.

Un grillage enveloppe le volume de l'hélice aérienne pour assurer la protection. Les extrémités des traverses comportent des roues amovibles. Ces roues sont montées sur des axes dont une extrémité vient s'emmancher dans l'extrémité de la traverse correspondante. Un moyen de verrouillage assure la fixation de l'axe de la roue dans la traverse. Ledit moyen peut être une goupille. L'axe de la roue comporte deux coudes qui lui permettent de dégager ladite roue du châssis et de surélever l'engin quand il est au sol pour que la garde au sol soit convenable. En retirant l'extrémité de l'axe de la roue de l'extrémité de la traverse, il est possible de réemmancher l'axe après l'avoir fait pivoter d'un certain angle ; ainsi, la roue n'est plus fonctionnelle, mais se trouve en position haute. Ladite roue, en position haute, peut faire office de garde-corps.

Les roues sont, de préférence, des pneus à basse pression.

Selon un autre mode de réalisation, la longueur des traverses peut être réglable pour régler l'écoulement adéquat de l'eau entre les deux planches. A cet effet, les traverses sont montées dans des tubes coulissants.Par des tubes coulissants, montés au niveau des rails et des traverses , il est possible de régler la hauteur du cadre d'accouplement .

Cette disposition permet d'adapter le dispositif pour accoupler deux planches et ce, quels que soient les types de planches qui varient toutes dans leurs dimensions et leur forme. De même, des rails de fixation peuvent être mis en place sur les planches. Ces rails sont fixés au niveau de l'emplanture de mât et du puits de dérive. C'est sur ces rails que viennent se fixer les traverses du cadre d'accouplement. Les rails comprtent de nombreux points de fixation avec des moyens rapides d'attache qúi permettent de bien positionner le cadre d'accouplement en fonction des caractéristiques esthétiques et techniques des planches utilisées. Les moyens de fixation des traverses sur les rails sont des chariots autobloquants qui se déplacent le long des dits rails.

Selon un autre mode de réalisation, le cadre d'accouplement peut ne comporter que deux roues amovibles disposées au niveau des traverses arrière et une roue directrice disposée dans le cockpit. Cette roue directrice peut être soit en position basse pour être fonctionnelle, soit en position haute. Il est également possible de disposer la roue directrice à l'arrière et les deux roues porteuses à l'avant.

Enfin, un second siège peut être mis en place.

Selon un autre mode de réalisation, l'inventeur a voulu adapter son dispositif d'accouplement de deux planches à voile, à un engin à voile ou à rame.

A cet effet, l'accouplement des deux planches à voile, s'effectue toujours à partir d'un cadre d'accouplement. Dans le mode de réalisation destiné à être propulsé par le vent, le mât est fixé sur l'arceau du carénage avant. Il ne traverse pas le carénage. Il est maintenu par des haubans de chaque côté et par un étai avant, fixé sur l'extrémité avant du carénage. Ce mât peut donc être monté rapidement et démonté tout aussi facilement.

Une dérive est disposée derrière le siège avant. Cette dérive est pivotante, ce qui permet l'escamotage en cas de choc. Sur le cadre des moyens faisant office de toletière permettent de mettre en place des tolets qui servent de point d'appui aux rames ou aux avirons.

Lesdits moyens faisant office de toletière peuvent être de simples tubes creux soudés ou fixés au cadre d'accouplement à ce niveau.

Dans ce mode de réalisation, le berceau du moteur peut recevoir, non plus une hélice aérienne, mais un moteur hors-bord.

Selon un autre mode de réalisation, il est possible d'utiliser des planches à skis. Lesdits skis pour la neige doivent être condamnés, car ils doivent, au préalable, comporter des points d'ancrage. Lesdits points d'ancrage permettent de fixer les traverses.

A l'extrémité de l'une des traverses, il est possible d'emmancher, de la même manière que les roues, un axe sur lequel est fixé un levier qui fait office de frein. Ledit levier fait office de frein en s'enfonçant dans la neige, lorsqu'il est placé vers la verticale.

Les dessins ci-joints, donnés à titre d'exemple indicatif et non limitatif, permettront aisément de comprendre l'invention. Ils représentent deux modes de réalisation.

La figure 1 est une vue de côté du mode de réalisation en hydroglisseur.

La figure 2 est une vue en plan de dessus de l'hydroglisseur.

La figure 3 est une vue en coupe selon l'axe A-A représenté à la figure 1.

Les figures 4 et 5 sont des vues en coupe mettant en évidence le moyen de fixation des roues dans les traverses.

La figure 6 est une vue de côté mettant en évidence la roue amovible, en position haute (en pointillés), ou en position basse.

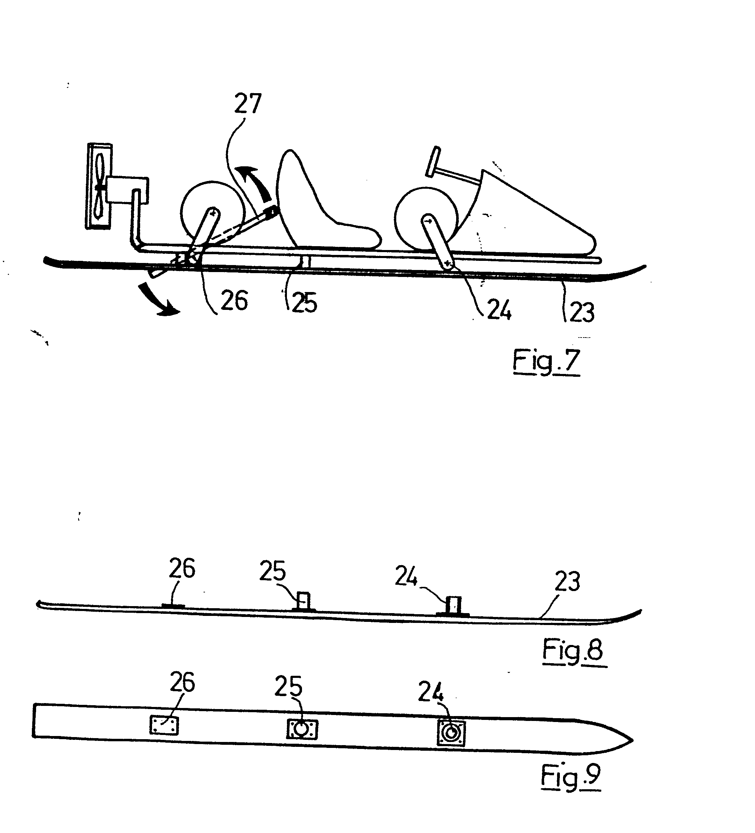

La figure 7 est une vue de côté de l'engin dont le cadre est mis en place sur une paire de skis.

La figure 8 est une vue de côté d'un ski avec ses points d'ancrage pour le cadre, le tube châssis et les traverses.

La figure 9 est une vue en plan du ski représenté à la figure 8.

Les figures 10, 11, 12 et 13 correspondent aux vues 1, 2, 3 et 7, mais où dans ce mode de réalisation de l'invention, le dispositif d'accouplement comporte des tubes coulissants qui font office de traverses réglables en longueur, le cadre d'accouplement est fixé aux planches par des rails, une roue directrice est disposée au niveau du cockpit, un second siège peut être mis en place.

La figure 14 est une vue de côté de l'engin composé à partir de deux planches à voile et gréé en voilier avec un moteur auxiliaire.

La figure 15 est une vue en plan de la figure 14.

Le dispositif selon l'invention est composé d'un cadre d'accouplement 1.

Le cadre d'accouplement 1 est composé de deux tubes qui font office de traverses 2 et 3 et d'un tube châssis 13. Aux extrémités 4 des traverses 2, 3, peuvent être fixées des roues amovibles 5.

Lesdites traverses 2 et 3 sont fixées d'une part au niveau de l'emplanture 5 de chaque mât, d'autre part au niveau de chaque puits de dérive 6.

Au niveau de l'emplanture 5 du mât, la fixation se fait par un emboîtage avec un pied autobloquant 7, analogue à celui du mât.

Au niveau du puits de dérive 6, la fixation s'effectue au moyen d'une plaque de couche 8 disposée sous la planche 9 de manière à éviter l'arrachement.

Sur lesdites traverses 2 et 3, est disposé un moyen faisant office de plancher 12 ; ledit plancher 12 est entouré par un tube châssis 13 solidaire des traverses.

Une barre d'accouplement 29 est disposée entre les deux anneaux d'amarrage 28. Ladite barre d'accouplement 29 est gainée de caoutchouc.

Au niveau de la poupe 10, un cadre vertical 11 fixé au tube châssis 13, permet de recevoir, sur un berceau 14, un moteur 15 actionnant une hélice aérienne 16. Ledit moteur 15 est orientable par une barre ou un volant 17 disposé vers la proue 18.

Au niveau de la proue 18, un carénage profilé 19 assure la protection de l'utilisateur contre les embruns. Ledit carénage 19 peut être formé par une toile plastifiée ou en polyester.

Un grillage 20 enveloppe le volume de l'hélice aérienne 16 pour assurer la protection.

Les extrémités 4 des traverses 2, 3 comportent des roues amovibles 5. Ces roues 5 sont montées sur des axes 21 dont une extrémité vient s'emmancher dans l'extrémité 4 de la traverse 2 ou 3 correspondante. Un moyen de verrouillage assure la fixation de l'axe 21 de la roue dans la traverse. Ledit moyen peut être une goupille 22. L'axe 21 de la roue comporte deux coudes qui lui permettent de dégager ladite roue 5 du châssis et de surélever l'engin quand il est au sol pour que la garde au sol soit convenable. En retirant l'extrémité de l'axe de la roue de l'extrémité de la traverse, il est possible de réemmancher l'axe après l'avoir fait pivoter d'un certain angle ; ainsi, la roue 5 n'est plus fonctionnelle, mais se trouve en position haute. Ladite roue 5, en position haute, peut faire office de garde-corps. Les roues 5 sont, de préférence, des pneus à basse pression.

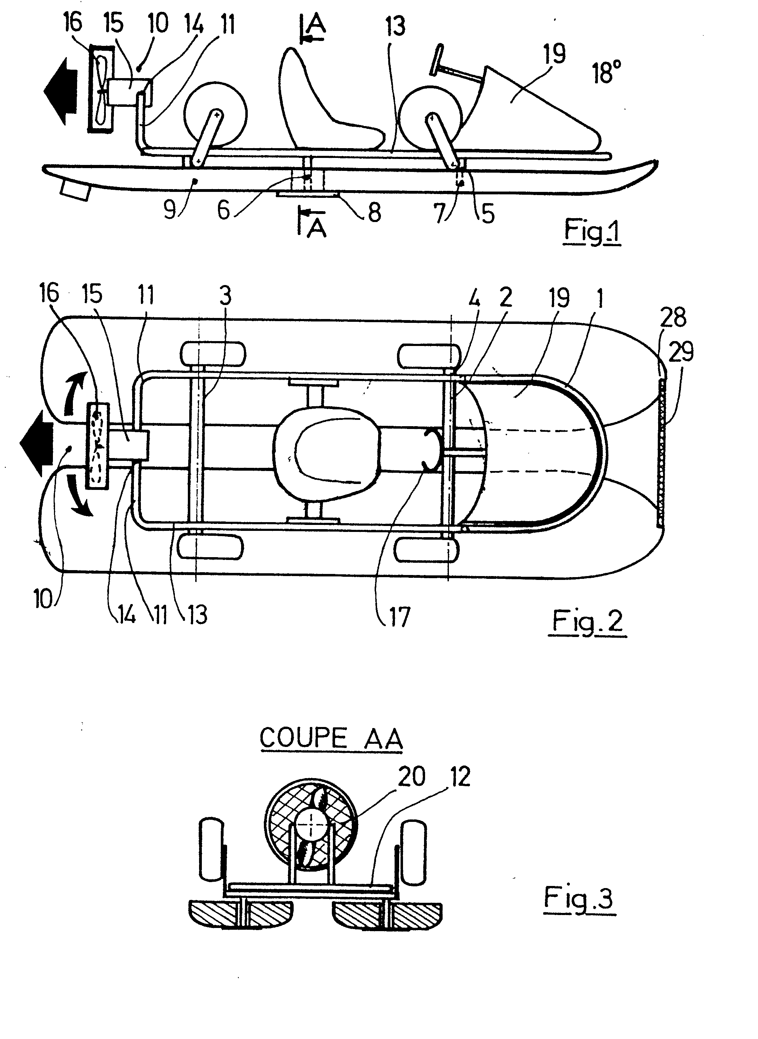

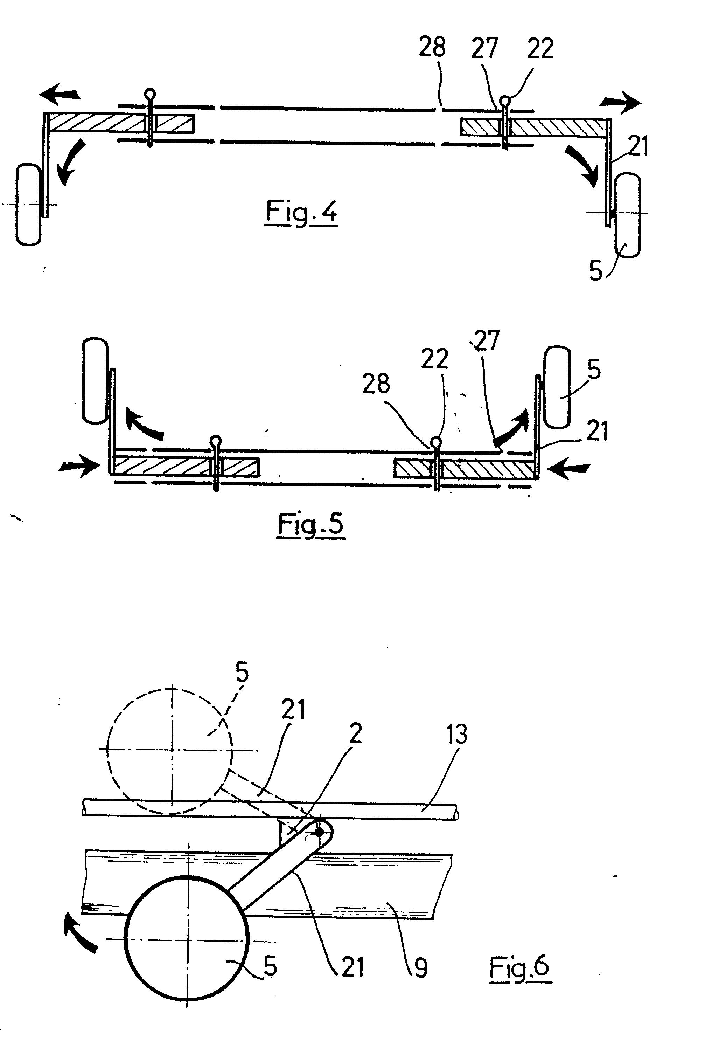

Comme cela est représenté sur les figures 4 et 6, l'axe 21 des roues 5 peut s'emmancher selon deux positions ; la première position, dans le trou de verrouillage 27 de la goupille 22, permet de fixer la roue 5, de manière à ce que celle-ci soit bien dégagée du tube châssis 13 et des planches 9 ; c'est le trou qui est le plus vers l'extérieur de l'engin. Un autre trou 28, plus vers l'intérieur de l'engin, permet, à l'axe 21 de la roue 5, de s'emmancher plus profondément et de réduire ainsi le volume d'encombrement desdites roues 5 et de leur axe 21.

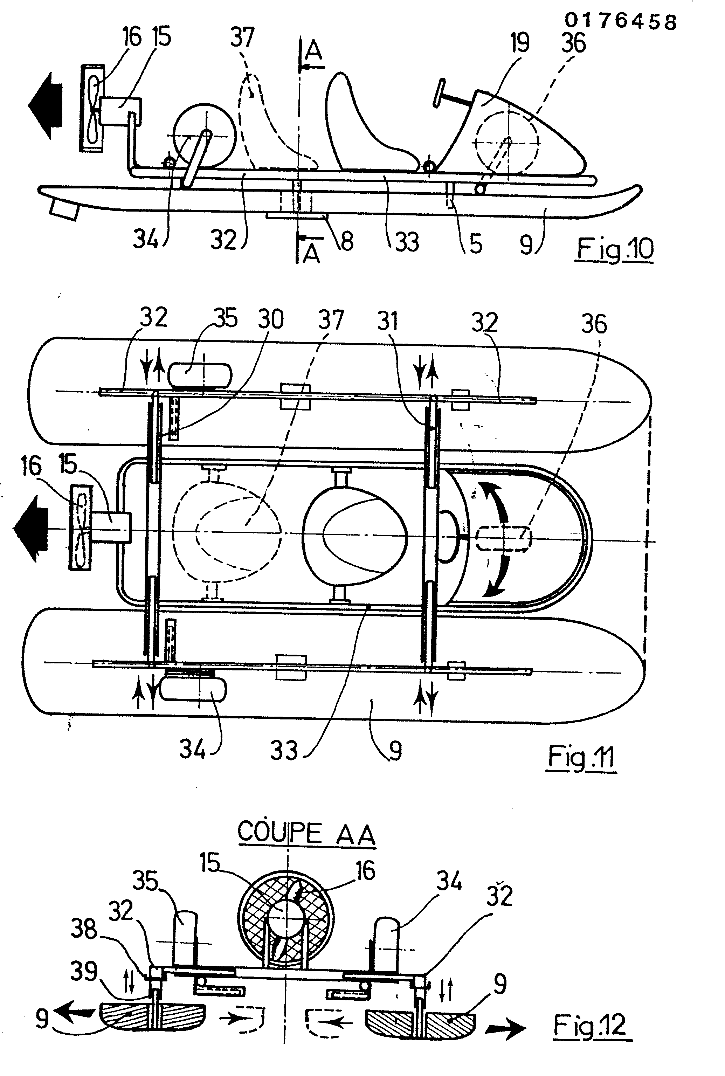

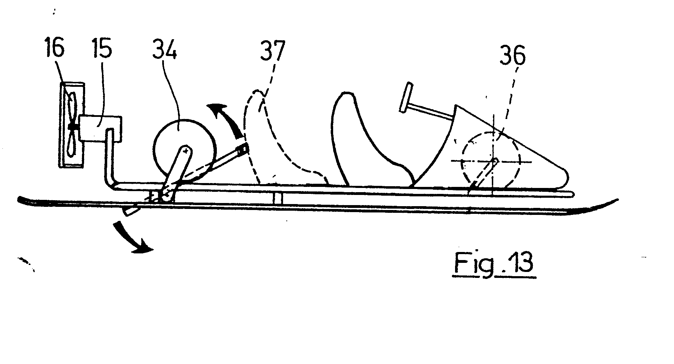

Selon le mode de réalisation représenté dans les figures 10, 11, 12 et 13, la longueur des traverses 30, 31, peut être réglable pour régler l'écoulement adéquat de l'eau entre les deux planches 9. A cet effet, les traverses 30,31 sont montées dans les tubes coulissants. Par des tubes coulissants 39, montés au niveau des rails 32 et des traverses 30,31 , il est possible de régler la hauteur du cadre d'accouplement 33 .Cette disposition permet d'adapter le dispositif pour accoupler deux planches et ce, quels que soient les types de planches qui varient toutes dans leurs dimensions et leur forme. De même, des rails 32 de fixation peuvent être mis en place sur les planches. Ces rails 32 sont fixés au niveau de l'emplanture 5 de mât et du puits de dérive 8. C'est sur ces rails 32 que viennent se fixer les traverses 30, 31 du cadre d'accouplement. Les rails 32 comportent de nombreux points de fixation avec des moyens rapides d'attache qui permettent de bien positionner le cadre d'accouplement 33 en fonction des caractéristiques esthétiques et techniques des planches utilisées. Les moyens de fixation des traverses 30,31 sur les rails 32 sont des chariots autobloquants 38 qui se déplacent le long des dits rails.

Selon un autre mode de réalisation, le cadre d'accouplement 33 peut ne comporter que deux roues amovibles 34, 35 disposées au niveau des traverses arrière 30 et une roue directrice 36 disposée dans le cockpit 37. Cette roue directrice peut être soit en position basse, pour être fonctionnelle, soit en position haute. Il est également possible de disposer la roue directrice à l'arrière et les deux roues porteuses à l'avant. Enfin, un second siège 37 peut être mis en place.

Selon un autre mode de réalisation, il est possible d'utiliser des planches à skis 23. Lesdits skis 23 pour la neige doivent être condamnés, car ils doivent, au préalable, comporter des points d'ancrage 24, 25, 26. Lesdits points d'ancrage permettent de fixer les traverses.

A l'extrémité 4 de l'une des traverses 2 ou 3, il est possible d'emmancher, de la même manière que les roues, un axe sur lequel est fixé un levier 27 qui fait office de frein. Ledit levier 27 fait office de frein en s'enfonçant dans la neige, lorsqu'il est placé vers la verticale.

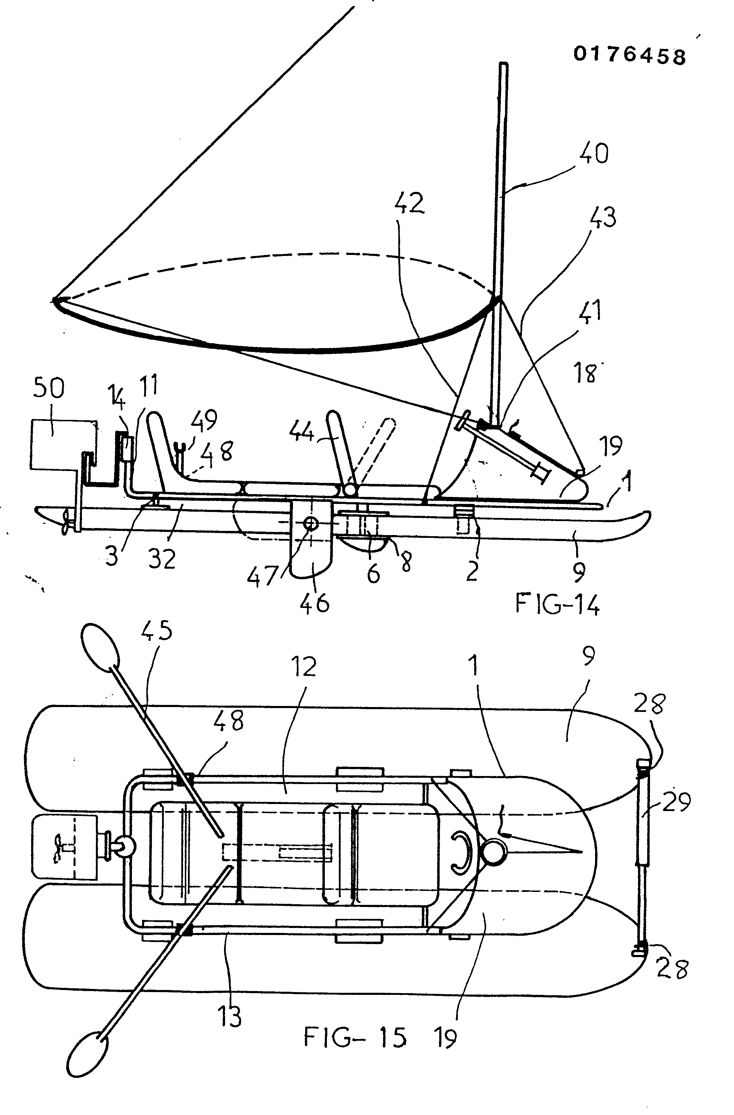

Selon le mode de réalisation représenté dans les figure 14 et 15, le mât 40 est emmanché dans un support de mât 41, dans la partie supérieure du carénage 19. Le mât est maintenu en place par des haubans 42 et un étai avant 43.

Le siège avant 44 peut être rabatable, il permet d'utiliser l'engin à la rame 45. Une dérive 46 est mise en place entre les deux planches. Cette

0176458

dérive 46 est fixée au plancher 12 solidaire du cadre d'accouplement des deux planches à voile 9. Cette dérive 46 est articulée sur un axe 47 qui permet un escamotage de ladite dérive 46.

Au niveau du siège arrière, un moyen faisant office de toletière 48 est mis en place. Il permet à ce niveau de disposer des tolets 49 qui serviront de point d'appui aux rames ou avirons 45. Les moyens faisant office de toletière 48 peuvent être, par exemple, des tubes creux soudés ou fixés par tout autre moyen au cadre d'accouplement 1.

Le berceau 14 peut recevoir un moteur hors-bord 50.

REVENDICATIONS

1. Dispositif pour accoupler deux planches à voile pour obtenir un engin terrestre ou marin caractérisé par le fait qu'il est composé d'un cadre d'accouplement (1, 33), qui est fixé aux planches (9, 23) par au moins deux points de fixation (7, 8 ou 24, 25, 26), et que les planches sont des planches à voile (9), les points de fixations sont disposés au niveau de l'emplanture (5) de chaque mât, et au niveau de chaque puits de dérive (6).

2. Dispositif pour accoupler deux planches à voile pour obtenir un engin terrestre ou marin selon la revendication 1 caractérisé par le fait que le cadre d'accouplement (1) est composé de deux tubes qui font office de traverses (2,3) coulissantes, réglables en fonction de l'écartement des planches, ledit cadre d'accouplement reçoit et fait office de support à un tube chassis (13).

3. Dispositif pour accoupler deux planches à voile pour obtenir un engin terrestre ou marin selon l'une quelconque des revendications 1 ou 2 caractérisé par le fait que les anneaux d'ancrage (28) sont reliés entre eux par une barre d'accouplement (29).

4. Dispositif pour accoupler deux planches à voile pour obtenir un engin terrestre ou marin selon l'une quelconque des revendications 1, 2 ou 3 caractérisé par le fait qu'au niveau de la poupe (10) ou de la partie arrière, un cadre vertical (11) fixé au tube châssis (13), permet de recevoir, sur un berceau (14), un moteur (15) actionnant une hélice aérienne (16) ; ledit moteur (15) est orientable par une barre ou un volant (17) disposé vers la proue (18), ou la partie avant.

5. Dispositif pour accoupler deux planches à voile pour obtenir un engin terrestre ou marin selon l'une quelconque des revendications 1, 2, 3 ou 4 caractérisé par le fait que les extrémités (4) des traverses (2, 3) comportent des roues amovibles (5) ; ces roues (5) sont montées sur des axes (21) dont une extrémité vient s'emmancher dans l'extrémité (4) de la traverse (2 ou 3) correspondante ; un moyen de verrouillage assure la fixation de l'axe (21) de la roue dans la traverse.

6. Dispositif pour accoupler deux planches à voile pour obtenir un engin terrestre ou marin selon l'une quelconque des revendications 1, 2, 3, 4 ou 5 caractérisé par le fait le moyen de verrouillage est une goupille (22).

7. Dispositif pour accoupler deux planches à voile pour obtenir un engin terrestre ou marin selon l'une quelconque des revendications 1, 2, 3, 4, 5 ou 6 caractérisé par le fait que l'axe (21) de la roue comporte deux coudes qui lui permettent de dégager ladite roue (5) du châssis et de surélever l'engin quand il est au sol pour que la garde au sol soit convenable; en retirant l'extrémité de l'axe de la roue de l'extrémité de la traverse, il est possible de réemmancher l'axe après l'avoir fait pivoter d'un certain angle ; ainsi, la roue (5) n'est plus fonctionnelle, mais se trouve en position haute ; Ladite roue (5), en position haute, peut faire office de garde-corps.

8. Dispositif pour accoupler deux planches à voile pour obtenir un engin terrestre ou marin selon l'une quelconque des revendications 1, 2, 3, 4, 5, 6 ou 7 caractérisé par le fait que lesdites traverses (2, 3) sont fixées d'une part au niveau de l'emplanture (5) de chaque mât, d'autre part au niveau de chaque puits de dérive (6) ; au niveau de l'emplanture (5) du mât, la fixation se fait par un emboîtage avec un pied autobloquant (7), analogue à celui du mât ; au niveau du puits de dérive (6), la fixation s'effectue au moyen d'une plaque de couche (8) disposée sous la planche (9) de manière à éviter l'arrachement.

9. Dispositif pour accoupler deux planches à voile pour obtenir un engin terrestre ou marin selon l'une quelconque des revendications 1, 2, 3 ou 4 caractérisé par le fait que la longueur des traverses (30, 31) peut être réglable par un moyen de réglage de manière à régler la largeur entre les planches (9) pour régler l'écoulement adéquat entre les deux planches (9).

10. Dispositif pour accoupler deux planches à voile pour obtenir un engin terrestre ou marin selon l'une quelconque des revendications 1, 2, 3, 4, 5 ou 9 caractérisé par le fait que le réglage de la longueur des traverses (30, 31) s'effectuent au moyen des tubes coulissants qui constituent lesdites traverses (30, 31).

11. Dispositif pour accoupler deux planches à voile pour obtenir un engin terrestre ou marin selon l'une quelconque des revendications 2, 3, 4, 5, 9 ou 10 caractérisé par le fait que la hauteur du cadre d'accouplement (33) est réglable par des tubes coulissants (39) montés au nuveau des rails 32 et des traverses (30, 31).

12. Dispositif pour accoupler deux planches à voile pour obtenir un engin terrestre ou marin selon l'une quelconque des revendications 1, 2, 3, 4, 5, 9, 10 ou 11 caractérisé par le fait que le cadre d'accouplement peut ne comporter que deux roues amovibles (34, 35) disposés au niveau des traverses (30 ou 31) et une roue directrice (36) ; cette roue directrice peut être soit en position basse, pour être fonctionnelle, soit en position haute.

13. Dispositif pour accoupler deux planches à voile pour obtenir un engin marin propulsé par le vent ou à la rame selon l'une quelconque des revendications 1, 2, 3 ou 4 caractérisé par le fait que le carénage (19) peut recevoir un mât (40), qui est maintenu par des haubans (42) et un étai avant (43) ; un moyen faisant office de dérive est mis en place entre les deux planches (9).

14. Dispositif pour accoupler deux planches à voile pour obtenir un engin marin propulsé par le vent ou à la rame selon la revendication 13 caractérisé par le fait qu'une dérive (46) est mise en place entre les deux planches ; cette dérive (46) est fixée au plancher (12) solidaire du cadre d'accouplement des deux planches à voile (9) ; cette dérive (46) est articulée sur un axe (47) qui permet un escamotage de ladite dérive (46).

15. Dispositif pour accoupler deux planches à voile pour obtenir un engin marin propulsé par le vent ou à la rame selon l'une quelconque des revendications 13 ou 14 caractérisé par le fait qu'au niveau du siège arrière, un moyen faisant office de toletière (48) est mis en place ; il permet, à ce niveau, de disposer des tolets (49) qui serviront de point d'appui aux rames ou avirons (45).

16. Dispositif pour accoupler deux planches à voile pour obtenir un engin marin propulsé par le vent ou à la rame selon la revendication 15 caractérisé par le fait que les moyens faisant office de toletière (48) peuvent être, par exemple, des tubes creux soudés ou fixés par tout autre moyen au cadre d'accouplement (1).

Fig.1

Fig.2

COUPE AA

20
12

Fig.3

0176458

28
27
22
21
5
28
22
27
5
21

Fig. 4

Fig. 5

5
21
2
13
5
21
9

Fig. 6

27
26
25
24
23

Fig.7

26
25
24
23
26
25
24

Fig.8

Fig.9

0176458

Fig.10

Fig.11

COUPE AA
15
16
35
34
32
38
39
9

Fig.12

16
15
34
37
36

Fig. 13

40
42
43
41
18
50
14
11
49
48
44
19
1
3
32
47
46
6
8
2
9
45
12
9
28
48
1
29
28
13
19

FIG-14

FIG- 15

Office européen des brevets

**0176458**

Numéro de la demande

## RAPPORT DE RECHERCHE EUROPEENNE

EP 85 43 0023

| Catégorie | Citation du document avec indication, en cas de besoin, des parties pertinentes | Revendication concernée | CLASSEMENT DE LA DEMANDE (Int. Cl.4) |
|---|---|---|---|
| D,X | FR-A-2 537 508 (COLLIN) * Page 1, lignes 23-27; figure 2 * | 1,2,5 | B 60 F 3/00<br>B 63 B 35/72 |
| X | FR-A-2 498 554 (BURGARD) * Figure 1; page 6, ligne 17 * | 1,2,13 | |
| D,A | FR-A-2 492 334 (LE GAL DE KERANGAL) | | |
| D,A | DE-A-2 938 211 (PFEIFFER) | | |
| D,A | FR-A-2 506 254 (LEMBEZAT) | | |

DOMAINES TECHNIQUES RECHERCHES (Int. Cl.4)

B 60 F
B 63 B
B 63 C
B 62 D
B 62 B
A 63 C

Le présent rapport de recherche a été établi pour toutes les revendications

| Lieu de la recherche | Date d'achèvement de la recherche | Examinateur |
|---|---|---|
| LA HAYE | 16-11-1985 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82